# EUROPEAN PATENT SPECIFICATION

(11) **EP 3 422 078 B1**
(45) Date of publication and mention of the grant of the patent: **23.12.2020**
(21) Application number: 17305830.6
(22) Date of filing: 30.06.2017
(51) Int. Cl.: G02B 27/01

(54) **COMBINER POSITIONING UNIT FOR A HEAD-UP DISPLAY SYSTEM, HEAD-UP DISPLAY SYSTEM AND VEHICLE**
KOMBINATORPOSITIONIERUNGSEINHEIT FÜR EIN HEADUP-ANZEIGESYSTEM, HEADUP-ANZEIGESYSTEM UND FAHRZEUG
UNITÉ DE POSITIONNEMENT DE COMBINEUR POUR SYSTÈME D'AFFICHAGE TÊTE HAUTE, SYSTÈME D'AFFICHAGE TÊTE HAUTE ET VÉHICULE

(43) Date of publication of application: 02.01.2019
(73) Proprietor: Valeo Comfort and Driving Assistance, 94046 Créteil Cedex (FR)
(72) Inventor: LE TOUMELIN, Loic, 74321 Bietigheim-Bissingen (DE); DELPIERRE, Laurent, 94046 Creteil (FR)
(74) Representative: Pothmann, Karsten

(56) References cited:
- WO-A2-2010/136572
- US-A- 5 381 267

## Description

The present invention refers to a combiner positioning unit for a head-up display (HUD) system for usage in vehicles, comprising a combiner pivotably arranged in a housing, wherein the combiner is pivotable between a folded-in storage position and a folded-out operating position, wherein for pivoting the combiner from storage position to operating position the combiner is first shifted against a spring force of a first spring element in axial direction of the pivot axis to release the combiner from storage position and then rotated around the pivot axis in operating position by a second spring element connected to the combiner.

The present invention also refers to head-up display system, comprising the inventive combiner positioning unit.

Furthermore, the present invention refers to a vehicle, comprising the head-up display system, comprising the inventive combiner positioning unit.

A head-up display system usually includes a projection unit which produces a light beam intended to be directed towards a combiner in order to project images, in particular operating or driving information of a vehicle, in the form of a virtual image, in the field of view of the user, in particular a driver of a motor vehicle. The combiner is typically an angled flat piece of glass or plastic located directly in front of the user that redirects the projected image from the projection unit in such a way as to see the field of view and the projected image at the same time. Combiners may have special coatings that reflect the monochromatic light projected onto it from the projection unit while allowing all other wavelengths of light to pass through.

A combiner positioning mechanism for a HUD system, which can move a combiner between a storage position and an operating position, according to the preamble of claim 1, is known in the prior art. For example a combiner positioning system is disclosed in document US 2009/0086329 A1. In this design, the positioning system is arranged on a frame including a base plate. A movable carrier is provided for supporting a combiner within the frame. The carrier is movable between a first end of the frame, where the combiner is in a retracted position (storage position), to a second end where the combiner is in a fully extended position (display position).

Furthermore the US 5,381,267 discloses a four bar linkage which supports a head-up-display (HUD) combiner for movement between an upper storage position and a lower operating position. A stop and overcenter mechanism securely locks the combiner in the operating position. A switch is actuated by the linkage when the combiner is in the operating position.

Combiner positioning units require careful consideration to ensure the performance in all kinds of different conditions such as changing temperatures on a dashboard of a vehicle behind a windshield or vibrations during movement of the vehicle. Especially a combiner should not automatically be moved from storage position in operating position due to operational vibrations of the vehicle. A repeatable positional accuracy is also important for the combiner positioning unit, because an improperly positioned combiner will not function properly in a HUD system.

It is an object of the present invention to provide a combiner positioning unit for a head-up display system comprising a combiner with an actuating mechanism for easily and comfortably moving the combiner between a storage position and an operating position, wherein the actuating mechanism comprises a reduced sensitivity against operating vibrations of the vehicle.

This object is achieved by the independent claims. Advantageous embodiments are given in the dependent claims, wherein each embodiment may individually or in combination be an aspect of the present invention.

In particular, the present invention provides combiner positioning unit for a head-up display system for usage in vehicles, comprising a housing, a combiner with a combiner support, wherein the combiner support is pivotably arranged around a pivot axis between a folded-in storage position and a folded-out operating position in the housing, and an actuating element for releasing the combiner support from the storage position, characterized in that the combiner support comprises a first locking element for engaging with a corresponding second locking element of the housing, and in storage position the first locking element is engaged with the second locking element, and by operating the actuating element, the combiner support is at least partially moved in axial direction of the pivot axis against a spring force of a first spring element, disengaging the connection of the first locking element and the second locking element, and a spring force of a second spring element connected to the combiner support pivots the combiner around the pivot axis into the operating position.

According to that invention, the combiner is preferably an angled flat piece of glass or plastic. The combiner may have at least on one side a coating that reflects monochromatic light projected onto the combiner from a projection unit while allowing all other wavelengths of light to pass through. Preferably, the combiner may have a curved surface to refocus an image displayed on the combiner. More preferably, the combiner is comparable to a semi-transparent mirror.

A combiner support is a supporting and/or mounting structure for the combiner, especially for holding the combiner in the supporting and/or mounting structure.

The basic idea of the invention is that the combiner positioning unit comprises a housing in which the combiner support of the combiner is pivotably arranged. The combiner is pivotable around a pivot axis of the combiner support in such a way that the combiner can be pivoted between a folded-in storage position and a folded-out operating position. In storage position, the combiner is folded in. That means that an image displayed on the combiner is not visible to a user. Preferably, when the head-up display system is used in a vehicle, in storage position the combiner is aligned with the dashboard of the vehicle. In operating position, the combiner is folded out for receiving a light beam of a projector. When used in a vehicle, the operating position is a rather upright position of the combiner with respect to the dashboard.

The combiner positioning unit further comprises an actuating element for releasing the combiner support from storage position for pivoting the combiner support and/or the combiner in operating position. The combiner support comprises a first locking element for engaging with a corresponding second locking element of the housing, wherein in storage position the first locking element is engaged with the second locking element. Thus, the combiner support comprising the combiner is hold in storage position by engaging and/or interlocking the first locking element with the second locking element.

The combiner support is at least partially moveably arranged in axial direction of the pivot axis against a spring force of a first spring element, wherein by operating the actuating element, the combiner support is at least partially moved in axial direction of the pivot axis against the spring force of the first spring element disengaging the connection of the first locking element and the second locking element. In this release position of the combiner support, a spring force of a second spring element connected to the combiner support pivots the combiner around the pivot axis from storage position into operating position. Hence, for moving the combiner from storage position to operating position, the combiner is first shifted against the spring force of the first spring element in axial direction of the pivot axis to release the combiner from storage position and then rotated around the pivot axis in operating position by a second spring element connected to combiner. Preferably, once the combiner is positioned in operating position, the spring force of the first spring element shifts the combiner support at least partially along the pivot axis in direction of the spring force of the first spring element. Hence, for moving the combiner from storage position to operating position, the combiner has to be first shifted at least partially in axial direction against the first spring element. Due to that movement, the actuating mechanism for releasing the combiner support from storage position for pivoting in operating position can comprise a reduced sensitivity against operating vibrations of the vehicle.

Generally, the first spring element can be arranged in any manner so that the combiner support is moveable in axial direction of the pivot axis against the first spring element. According to a preferred embodiment of the invention, the first spring element is arranged on the pivot axis between the combiner support and the housing. Hence, the spring force of the first spring element is orientated in longitudinal direction of the pivot axis. Preferably, in storage position of the combiner support, the first spring element is pre-loaded applying a spring force in axial direction of the pivot axis for engaging the first locking element with the second locking element. Hence, the combiner support can be securely positioned in storage position.

The second spring element can be arranged in any manner according to the combiner support for moving the combiner support respectively combiner from storage position to operating position once the first locking element and the second locking element are disengaged. According to a preferred embodiment of the invention, the second spring element is connected to the combiner support in a direction perpendicular to the pivot axis of the combiner support. A lever arm and/or lever section is arranged between the pivot axis of the combiner support and the connection point of the second spring element to the combiner support so that the spring force of the second spring element can turn the combiner support around the pivot axis. Preferably, the second spring element is back-anchored with the housing.

According to a preferred embodiment of the invention, the second spring element is pre-loaded when the combiner is in storage position. Hence, once the supporting structure is at least partially shifted in axial direction of the pivot axis against the spring force of the first spring element for disengaging the connection of the first locking element, the spring force of the pre-loaded second spring element automatically moves the combiner support in the operating position.

Generally, the actuating element can be designed in such a way that by operating the actuating element the supporting structure is at least partially shifted in axial direction of the pivot axis against the spring force for disengaging the connection of the first locking element and the second locking element. According to a preferred embodiment of the invention, the actuating element comprises an actuating button guided in a guiding hole of the housing, and an actuating wheel rotatably arranged in the housing in operating connection with the actuating button, so that the actuating wheel is at least partially rotatable around its rotational axis due to a translational movement of the actuating button, wherein the actuating wheel is in operating connection with the combiner support, so that due to the rotational movement of the actuating wheel the combiner support is at least partially moved in axial direction of the pivot axis against the spring force of the first spring element, disengaging the connection of the first locking element and the second locking element. Hence, due to the transmission of the translational movement of the actuating button on the actuating wheel, which is in operating contact with the combiner support, the distance between the combiner support and the actuating button for manually operating the actuating button can be increased, allowing a comfortable operation of the combiner positioning unit for a user.

According to a preferred embodiment of the invention, the actuating button is operable against a spring force of a third spring element, wherein the third spring element is preferably arranged between the housing and a button head of the actuating button. Hence, once the actuating button is pressed and released, the actuating button is automatically moved back in the initial position by the spring force of the third spring element.

The operating connection between the actuating button and the actuating wheel can be designed in different ways to transmit the translational movement of the actuating button on the actuating wheel. According to a preferred embodiment of the invention, the operating connection between the actuating button and the actuating wheel is a toothed structure. Hence, a reliable and robust operating connection for an interaction of the actuating button and the actuating wheel is provided.

According to a preferred embodiment of the invention, the toothed structure of the actuating wheel is arranged on an outer periphery of a first projection of the actuating wheel extending in radial direction. Hence, the distance between the actuating wheel and the actuating button can be increased without enlarging the diameter of the actuating wheel. Thus, the installation space and weight of the actuating wheel can be reduced. By enlarging the distance between the actuating wheel and the actuating button, the actuating button can be comfortably positioned for a user.

In a preferred embodiment of the invention, the actuating wheel comprises a second projection extending in radial direction comprising an actuating cam for operating with the combiner support, wherein the actuating cam extends in axial direction of the actuating wheel. The second projection is preferably arranged spaced apart from the first projection and more preferably directed basically in opposite direction of the first projection.

According to a preferred embodiment of the invention, the actuating wheel is in operating connection with the housing so that due to an rotational movement of the actuating wheel, the actuating wheel is at least partially moved in axial direction of the rotational axis, wherein due to the axial movement of the actuating wheel the combiner support is at least partially moved in axial direction of the pivot axis against the spring force of the first spring element disengaging the connection of the first locking element and the second locking element. Hence, the translational move of the actuating button is transferred into a rotational movement of the actuating wheel and into a movement of the actuating wheel along its rotational axis. The rotational axis is preferably arranged in parallel direction to the pivot axis of the combiner support so that the radial direction of the actuating wheel is directed perpendicular to the pivot axis of the combiner support. Hence, the structural size of the combiner positioning unit in its width can be reduced.

In a preferred embodiment of the invention, the actuating wheel comprises a front side arranged in a direction of the rotational axis of the actuating wheel facing the housing, wherein at least one first ramp element comprising an inclined first sliding surface with respect to the front side of the actuating wheel is arranged on the front side, and the housing comprises on its surface facing the actuating wheel at least one corresponding second ramp element comprising an inclined second sliding surface, wherein in an rotational movement of the actuating wheel relative to the housing, the inclined first sliding surface slides at least partially along the inclined second sliding surface moving the actuating element in axial direction of the rotational axis. Preferably, the actuating wheel comprises a plurality of circumferentially arranged first ramp elements on the first side and the housing a plurality of corresponding second ramp elements. Hence, while rotating the actuating wheel, the actuating wheel is uniformly moved in axial direction, applying a force on the combiner support for moving respectively shifting the combiner support in axial direction of the pivot axis against the spring force of the first spring element.

According to a preferred embodiment of the invention, the actuating wheel is at least partially moveable in axial direction of the rotational axis against a spring force of a fourth spring element, wherein the fourth spring element is preferably arranged in longitudinal direction of the rotational axis of the actuating wheel. More preferably the fourth spring element is pre-loaded applying a spring force on the actuating wheel in axial direction to press the front side of the actuating wheel with its at least one first ramp element against the housing comprising the at least one corresponding second ramp element. Hence, when operating the actuating button for disengaging the connection of the first locking element and the second locking element, the actuating wheel is rotated in peripheral direction and shifted in axial direction against the spring force of the fourth spring element. Due to the movement of the actuating wheel in axial direction a force is applied on the combiner support for shifting the combiner support in axial direction of the pivot axis against the spring force of the first spring element for disengaging the connection of the first locking element and the second locking element. When the actuating button is released, the spring force of the fourth spring will shift the actuating wheel back in its initial position.

In a preferred embodiment of the invention, the first locking element is a locking pin and the second locking element is an engagement hole in the housing. Hence, a simple an inexpensive first and second locking element is provided.

Usually, once the combiner is positioned in operating position, the spring force of the first spring element shifts the combiner support at least partially along the pivot axis in direction of the spring force. Therefore, when manually moving the combiner from operating position to storage position, the combiner support has to be first shifted in axial direction of the pivot axis of the combiner support against the spring force of the first spring element. According to a preferred embodiment of the invention, the locking pin and/or the housing surrounding the engagement hole comprises an inclined structure formed and arranged in such a manner that when the combiner is manually pivoted from operating position in storage position the locking pin slides along the inclined structure shifting the combiner support in axially direction against the spring force of the first spring element and when the locking pin is aligned with the engagement hole, the spring force of the first spring element pushes the combiner support in opposite axial direction for engaging the locking pin in the engagement hole. Hence, the combiner can be easily moved from operating position in storage position.

The invention relates to a head-up display system for a vehicle, comprising a combiner positioning unit, comprising a housing, a combiner with a combiner support, wherein the combiner support is pivotably arranged around a pivot axis between a folded-in storage position and a folded-out operating position in the housing, and an actuating element for releasing the combiner support from the storage position, characterized in that the combiner support comprises a first locking element for engaging with a corresponding second locking element of the housing, and in storage position the first locking element is engaged with the second locking element, and by operating the actuating element, the combiner support is at least partially moved in axial direction of the pivot axis against a spring force of a first spring element, disengaging the connection of the first locking element and the second locking element, and a spring force of a second spring element connected to the combiner support pivots the combiner around the pivot axis into the operating position, and a projector to generate a light beam loaded with information to be displayed on the combiner in operation position.

According to a preferred embodiment of the invention, in storage-position the projector is at least partially covered by the combiner. Hence, in storage position the projector can be easily protected, especially for environmental conditions like dust or the like. Furthermore, the invention relates to a vehicle comprising a head-up display, comprising a combiner positioning unit, comprising a housing, a combiner with a combiner support, wherein the combiner support is pivotably arranged around a pivot axis between a folded-in storage position and a folded-out operating position in the housing, and an actuating element for releasing the combiner support from the storage position, characterized in that the combiner support comprises a first locking element for engaging with a corresponding second locking element of the housing, and in storage position the first locking element is engaged with the second locking element, and by operating the actuating element, the combiner support is at least partially moved in axial direction of the pivot axis against a spring force of a first spring element, disengaging the connection of the first locking element and the second locking element, and a spring force of a second spring element connected to the combiner support pivots the combiner around the pivot axis into the operating position, and a projector to generate a light beam loaded with information to be displayed on the combiner in operation position.

These and other aspects of the invention will be apparent from and elucidated with reference to the embodiments described hereinafter.

In the drawings:
- Fig. 1: shows a schematic front view of a combiner positioning unit comprising a combiner in storage position, according to a preferred embodiment of the invention,
- Fig. 2: shows a detailed view of the a first locking element and a second locking element for interlocking the combiner support in storage position, according to the preferred embodiment of the invention,
- Fig. 3: shows a schematic rear view of the combiner positioning unit, wherein the combiner is in storage position, according to the preferred embodiment of the invention,
- Fig. 4: shows a schematic rear view of the combiner positioning unit, wherein the combiner is moved to operating position, according to the preferred embodiment of the invention,
- Fig. 5: shows a view of an actuating element for releasing a combiner support of the combiner from storage position in an initial position, according to the preferred embodiment of the invention,
- Fig. 6: shows a view of the actuating element for releasing the combiner support from storage position in an actuating position, according to the preferred embodiment of the invention,
- Fig. 7: shows a top view of the actuating element in the initial position, according to the preferred embodiment of the invention,
- Fig. 8: shows a top view of the actuating element in actuating position, according to the preferred embodiment of the invention.

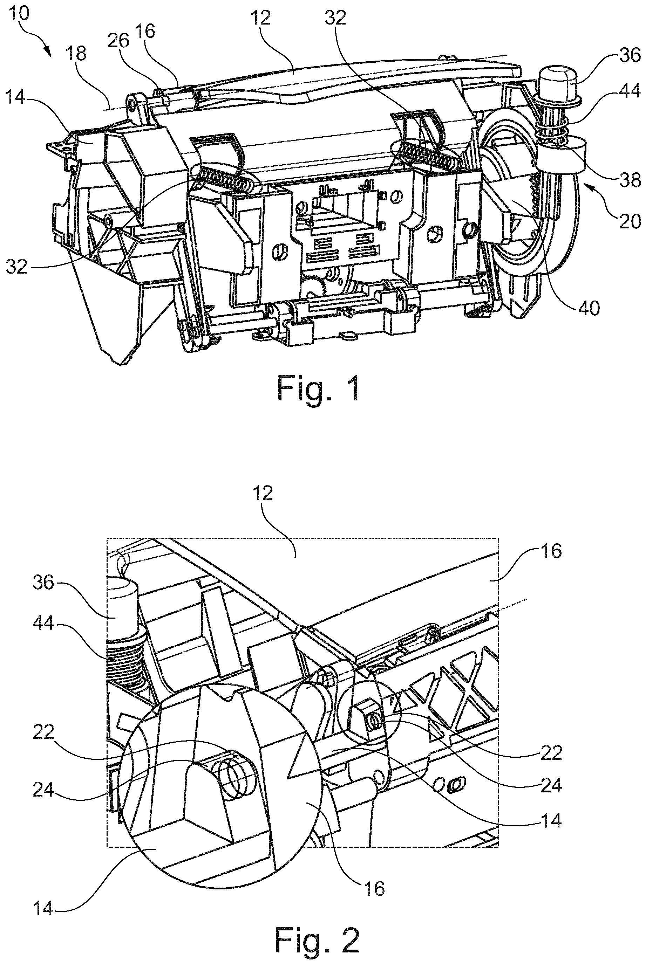

Figure 1 shows a schematic front view of a combiner positioning unit 10 for a head-up display system for usage in vehicles. A head-up display systems usually includes a projection unit which produces a light beam intended to be directed towards a combiner 12 of the combiner positioning unit 10 in order to project images, in particular operating or driving information of a vehicle, in the form of a virtual image, in the field of view of the user, in particular a driver of a motor vehicle. Preferably, the head-up system is arranged in and/or on a dashboard between the steering wheel and the windshield of a vehicle. The combiner positioning unit 10 is configured for positioning the combiner 12 between a storage position and an operating position, wherein in storage position the combiner 12 is folded in, preferably to cover the projecting unit protecting it from environmental influences like dust or the like. In operating position, the combiner 12 is folded out for receiving the light beam.

The combiner 12 is a curved flat piece of glass or plastic located directly in front of the user that redirects the projected image from the projection unit in such a way as to see the field of view and the projected image at the same time. The combiner 12 has a special coatings that reflect the monochromatic light projected onto it from the projection unit while allowing all other wavelengths of light to pass through.

The combiner positioning unit 10 comprises a housing 14 and a combiner support 16 for receiving and/or holding the combiner 12. The combiner support 16 is pivotably arranged in the housing 14, wherein the combiner 12, mounted in the combiner support 16, can be pivoted around its pivot axis 18 between the folded-in storage position and the folded-out operating position. In Figure 1, the combiner 12 is shown in storage position. The combiner positioning unit 10 further comprises an actuating element 20 that is in operating connection with the combiner support 16 for releasing the combiner support 16 from storage position for pivoting the combiner support 16 and the combiner 12 in operating position. The combiner support 16 comprises a first locking element 22 for engaging with a corresponding second locking element 24 of the housing 14, wherein in storage position the first locking element 22 is engaged with the second locking element 24 as shown in Figure 2. Thus, the combiner support 16, comprising the combiner 12 is hold in storage position by engaging the first locking element 22 with the second locking element 24. The first locking element 22 is a locking pin and the second locking element 24 is an engagement hole in the housing 14.

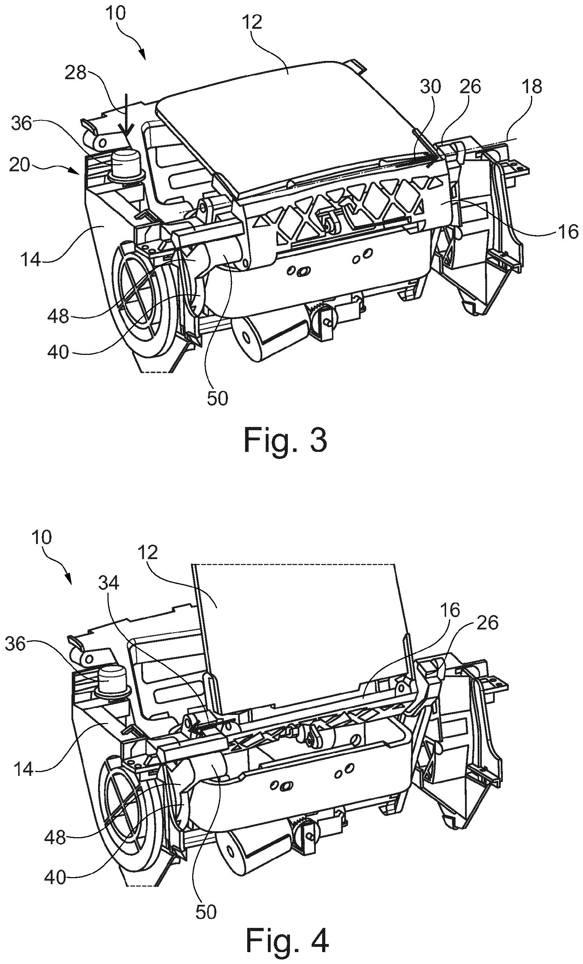

Figure 3 shows a schematic rear view of the combiner positioning unit 10, wherein the combiner 12 is in storage position. The combiner support 16 is at least partially moveably arranged in axial direction of the pivot axis 18 against a spring force of a first spring element 26, wherein by operating the actuating element 20, which is indicated by the first arrow 28, the combiner support 16 is at least partially moved in axial direction of the pivot axis 18 against the spring force of the first spring element 26, disengaging the connection of the first locking element 22 and the second locking element 24. The movement of the combiner support 16 along the pivot axis 18 against the spring force of the first spring element 26 is indicated by a second arrow 30. In release position of the combiner support 16, a pre-loaded spring force of a second spring element 32, connected to the combiner support 16 as shown in Figure 1, pivots the combiner 12 around the pivot axis 18 from storage position into operating position. Hence, for moving the combiner support 16 with the combiner 12 from storage position to operating position, the combiner support 16 is first shifted against the spring force of the first spring element 26 in axial direction of the pivot axis 18 to release the combiner 12 from storage position and then rotated around the pivot axis 18 in operating position by the second spring element 32 connected to combiner support 16. Due to that the actuating mechanism for releasing the combiner support 16 from storage position for rotating in operating position, the sensitivity of the combination position unit 10 against operating vibrations of the vehicle can be reduced.

Figure 4 shows a schematic front view of the combiner positioning unit 10, wherein the combiner 12 is moved to operating position. Once the combiner 12 is positioned in operating position, the spring force of the first spring element 26 shifts the combiner support at least partially along the pivot axis 18 in direction of the spring force of the first spring element 26, which is indicated by a third arrow 34.

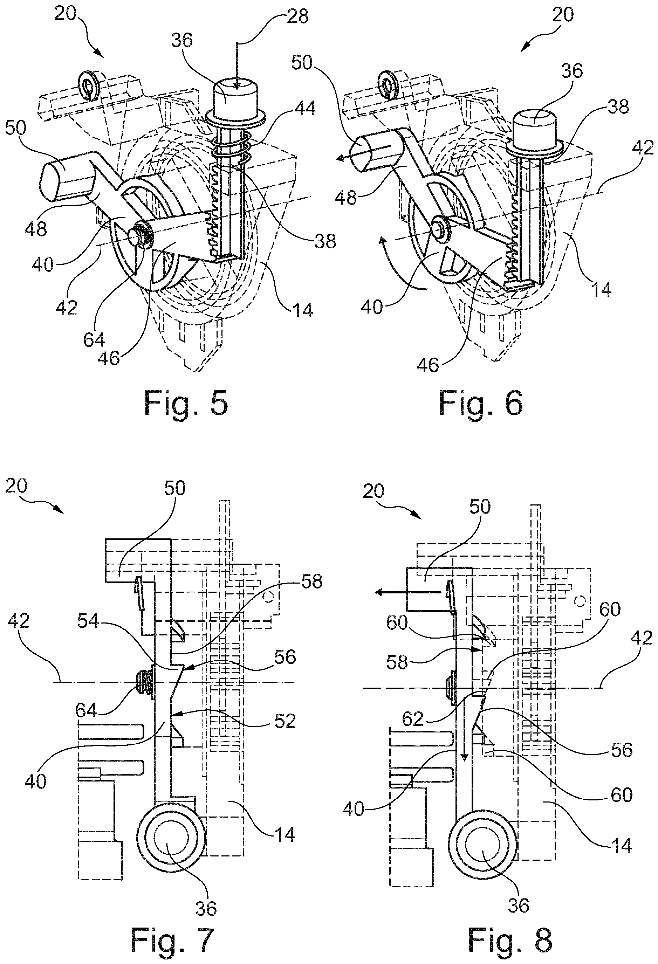

Figures 5 to 8 show a detailed view of the actuating element 20. The actuating element 20 comprises an actuating button 36 guided in a guiding hole 38 of the housing 14, and an actuating wheel 40, rotatably arranged in the housing 14 in operating connection with the actuating button 36, so that the actuating wheel 40 is at least partially rotatable around its rotational axis 42 due to a translational movement of the actuating button 36. The translational movement of the actuating button 36 is indicated by the first arrow 28 pointing on a head of the actuating button 36. The actuating wheel 40 is in operating connection with the combiner support 16, so that due to the rotational movement of the actuating wheel 40 the combiner support 16 is at least partially moved in axial direction of the pivot axis 18 against the spring force of the first spring element 26 disengaging the connection of the first locking element 22 and the second locking element 24.

The actuating button 36 is operable against a spring force of a third spring element 44, arranged between the housing 14 and the head of the actuating button 36. Hence, once the actuating button 36 is pressed and released, the actuating button 36 is automatically moved back in the initial position by the spring force of the third spring element 44.

The operating connection between the actuating button 36 and the actuating wheel 40 is a toothed structure. The toothed structure of the actuating wheel 40 is arranged on an outer periphery of a first projection 46 of the actuating wheel 40, extending in radial direction. Hence, the distance between the actuating wheel 40 and the actuating button 36 can be increased without enlarging the diameter of the actuating wheel 40. Thus, the installation space and weight of the actuating wheel 40 can be reduced. By enlarging the distance between the actuating wheel 40 and the actuating button 36, the actuating button 36 can be comfortably positioned for a user.

A second projection 48, extending in radial direction of the actuating wheel 40, comprises an actuating cam 50 for operating with the combiner support 16, wherein the actuating cam 50 extends in axial direction of the actuating wheel 40. The second projection 48 is arranged spaced apart from the first projection 46, especially directed basically in opposite direction of the first projection 46.

Figures 7 and 8 show a top view of the actuating element 20. The actuating wheel 40 comprises a front side 52 arranged in a direction of the rotational axis 42 of the actuating wheel 40 facing the housing 14, wherein at least one first ramp element 54 comprising an inclined first sliding surface 56 with respect to the front side 52 of the actuating wheel 40 is arranged on the front side 52. The housing 14 comprises on its surface 58 facing the actuating wheel 40 at least one corresponding second ramp element 60 comprising an inclined second sliding surface 62, wherein in an rotational movement of the actuating wheel 40 relative to the housing 14, the inclined first sliding surface 56 slides at least partially along the inclined second sliding surface 62 moving the actuating wheel 40 in axial direction of the rotational axis 42 against a spring force of a fourth spring element 64, wherein the fourth spring element 64 is arranged in longitudinal direction of the rotational axis 42 of the actuating wheel 40. The fourth spring element 64 is pre-loaded applying a spring force on the actuating wheel 40 in axial direction to press the front side 52 of the actuating wheel 40 with its at least one first ramp element 54 against the housing 14 comprising the at least one corresponding second ramp element 60. Hence, when operating the actuating button 36 for disengaging the connection of the first locking element 22 and the second locking element 24, the actuating wheel 40 is rotated in peripheral direction and shifted in axial direction against the spring force of the fourth spring element 64. Due to the movement of the actuating wheel 40 in axial direction a force is applied via the actuating cam 50 on the combiner support 16 for shifting the combiner support 16 in axial direction of the pivot axis 18 against the spring force of the first spring element 26 for disengaging the connection of the first locking element 22 and the second locking element 24. The second spring element 32 automatically moves the combiner support 16 and the combiner 12 in operating position. When the actuating button 36 is released, the actuating wheel 40 is shifted back in its initial position by the fourth spring element 64. The actuating button 36 is moved back in its initial position by the spring force of the third spring element 44.

**Reference signs list**

| | |
|---|---|
| Combiner positioning unit | 10 |
| Combiner | 12 |
| Housing | 14 |
| Combiner support | 16 |
| Pivot axis of combiner support | 18 |
| Actuating element | 20 |
| First locking element | 22 |
| Second locking element | 24 |
| Frist spring element | 26 |
| First arrow | 28 |
| Second arrow | 30 |
| Second spring element | 32 |
| Third arrow | 34 |
| Actuating button | 36 |
| Guiding hole | 38 |
| Actuating wheel | 40 |
| Rotational axis | 42 |
| Third spring element | 44 |
| First projection | 46 |
| Second projection | 48 |
| Actuating cam | 50 |
| Front side | 52 |
| Frist ramp element | 54 |
| First sliding surface | 56 |
| Surface of the housing | 58 |
| Second ramp element | 60 |
| Second sliding surface | 62 |
| Fourth spring element | 64 |

## Claims

1. Combiner positioning unit (10) for a head-up display system for usage in vehicles, comprising
a housing (14),
a combiner (12) with a combiner support (16), wherein the combiner support (16) is pivotably arranged around a pivot axis (18) between a folded-in storage position and a folded-out operating position in the housing (14), and
an actuating element (20) for releasing the combiner support (16) from the storage position, whereby
the combiner support (16) comprises a first locking element (22) for engaging with a corresponding second locking element (24) of the housing (14), and in the storage position the first locking element (22) is engaged with the second locking element (24), **characterized in that**
the combiner support (16) is at least partially movable in axial direction of the pivot axis (18) against a spring force of a first spring element (26) by operating the actuating element (20), so that the connection of the first locking element (22) and the second locking element (24) is disengageable, and whereby the combiner (12) is pivotable around the pivot axis (18) into the operating position by a spring force of a second spring element (32) connected to the combiner support (16).

2. Combiner positioning unit according to claim 1, **characterized in that** the first spring element (26) is arranged on the pivot axis (18) between the combiner support (16) and the housing (14).

3. Combiner positioning unit according to claim 1 or 2, **characterized in that** the second spring element (32) is connected to the combiner support (16) in a direction perpendicular to the pivot axis (18) of the combiner support (16).

4. Combiner positioning unit according to one of the claims 1 to 3, **characterized in that** the second spring element (32) is pre-loaded when the combiner (12) is in storage position.

5. Combiner positioning unit according to one of the claims 1 to 4, **characterized in that** the actuating element (20) comprises
an actuating button (36) guided in a guiding hole (38) of the housing (14) and
an actuating wheel (40) rotatably arranged in the housing (14) and in operating connection with the actuating button (36), so that
the actuating wheel (40) is at least partially rotatable around its rotational axis (42) due to a translational movement of the actuating button (36), wherein the actuating wheel (40) is in operating connection with the combiner support (16), so that due to the rotational movement of the actuating wheel (40) the combiner support (16) is at least partially moved in axial direction of the pivot axis (18) against the spring force of the first spring element (26) disengaging the connection of the first locking element (22) and the second locking element (24).

6. Combiner positioning unit according to claim 5, **characterized in that** the actuating button (36) is operable against a spring force of a third spring element (44), preferably arranged between the housing (14) and a button head of the actuating button (36).

7. Combiner positioning unit according to claim 5 or 6, **characterized in that** the operating connection between the actuating button (36) and the actuating wheel (40) is a toothed structure.

8. Combiner positioning unit according to claim 7, **characterized in that** the toothed structure of the actuating wheel (40) is arranged on an outer periphery of a first projection (46) of the actuating wheel (40) extending in radial direction.

9. Combiner positioning unit according to one of the claims 5 to 8, **characterized in that** the actuating wheel (40) comprises a second projection (48) extending in radial direction comprising an actuating cam (50) for operating with the combiner support (16), wherein the actuating cam (50) extends in axial direction of the actuating wheel (40).

10. Combiner positioning unit according to one of the claims 5 to 9, **characterized in that** the actuating wheel (40) is in operating connection with the housing (14) so that due to an rotational movement of the actuating wheel (40), the actuating wheel (40) is at least partially moved in axial direction of the rotational axis (42), wherein due to the axial movement of the actuating wheel (40) the combiner support (16) is at least partially moved in axial direction of the pivot axis (18) against the spring force of the first spring element (26) disengaging the connection of the first locking element (22) and the second locking element (24).

11. Combiner positioning unit according to one of the claims 5 to 10, **characterized in that** the actuating wheel (40) comprises a front side (52) arranged in direction of the rotational axis (42) of the actuating wheel (40) facing the housing (14), wherein at least one first ramp element (54) comprising an inclined first sliding surface (56) with respect to the front side (52) of the actuating wheel (40) is arranged on the front side (52), and the housing (14) comprises on its surface (58) facing the actuating wheel (40) at least one corresponding second ramp element (60) comprising an inclined second sliding surface (62), wherein in an rotational movement of the actuating wheel (40) relative to the housing (14), the inclined first sliding surface (56) slides at least partially along the inclined second sliding surface (62) moving the actuating wheel (40) in axial direction of the rotational axis (42).

12. Combiner positioning unit according to claims 10 or 11, wherein the actuating wheel (40) is at least partially moveable in axial direction of the rotational axis (42) against a spring force of a fourth spring element (64), wherein the fourth spring element (64) is preferably arranged in longitudinal direction of the rotational axis (42) of the actuating wheel (40).

13. Combiner positioning unit according to one of the previous claims, **characterized in that** the first locking element (22) is a locking pin and the second locking element (24) is an engagement hole in the housing (14).

14. Combiner positioning unit according to claim 13, **characterized in that** the locking pin and/or the housing (14) surrounding the engagement hole comprises an inclined structure formed and arranged in such a manner that when the combiner (12) is manually pivoted from operating position in storage position the locking pin slides along the inclined structure shifting the combiner support (16) in axially direction against the spring force of the first spring element (26) and when the locking pin is aligned with the engagement hole, the spring force of the first spring element (26) shifts the combiner support 16 in axial direction for engaging the locking pin in the engagement hole.

## Patentansprüche

1. Combinerpositionierungseinheit (10) für ein Head-up-Display-System zur Verwendung in Fahrzeugen, Folgendes umfassend:
ein Gehäuse (14),
einen Combiner (12) mit einer Combiner-Halterung (16), wobei die Combiner-Halterung (16) um eine Schwenkachse (18) zwischen einer zusammengeklappten Lagerposition und einer aufgeklappten Betriebsposition verschwenkbar im Gehäuse (14) angeordnet ist, und
ein Betätigungselement (20) zum Lösen der Combiner-Halterung (16) aus der Lagerposition, wobei die Combiner-Halterung (16) ein erstes Verriegelungselement (22) umfasst, um in ein zugehöriges zweites Verriegelungselement (24) des Gehäuses (14) einzugreifen, und wobei das erste Verriegelungselement (22) in der Lagerposition in das zweite Verriegelungselement (24) eingreift, **dadurch gekennzeichnet, dass**
die Combiner-Halterung (16) zumindest teilweise in Axialrichtung der Schwenkachse (18) gegen eine Federkraft eines ersten Federelements (26) beweglich ist, indem das Betätigungselement (20) bedient wird, sodass die Verbindung des ersten Verriegelungselements (22) mit dem zweiten Verriegelungselement (24) lösbar ist, und wobei der Combiner (12) durch eine Federkraft eines zweiten Federelements (32), das mit der Combiner-Halterung (16) verbunden ist, um die Schwenkachse (18) in die Betriebsposition verschwenkbar ist.

2. Combinerpositionierungseinheit nach Anspruch 1, **dadurch gekennzeichnet, dass** das erste Federelement (26) auf der Schwenkachse (18) zwischen der Combiner-Halterung (16) und dem Gehäuse (14) angeordnet ist.

3. Combinerpositionierungseinheit nach Anspruch 1 oder 2, **dadurch gekennzeichnet, dass** das zweite Federelement (32) in eine Richtung senkrecht zur Schwenkachse (18) der Combiner-Halterung (16) mit der Combiner-Halterung (16) verbunden ist.

4. Combinerpositionierungseinheit nach einem der Ansprüche 1 bis 3, **dadurch gekennzeichnet, dass** das zweite Federelement (32) vorgespannt wird, wenn sich der Combiner (12) in der Lagerposition befindet.

5. Combinerpositionierungseinheit nach einem der Ansprüche 1 bis 4, **dadurch gekennzeichnet, dass** das Betätigungselement (20) Folgendes umfasst:
einen Betätigungstaster (36), der in eine Führungsbohrung (38) des Gehäuses (14) geführt wird, und
ein Betätigungsrad (40), das drehbar im Gehäuse (14) angeordnet ist und mit dem Betätigungstaster (36) wirkverbunden ist, sodass
das Betätigungsrad (40) aufgrund einer Übersetzungsbewegung des Betätigungstasters (36) zumindest teilweise um seine Drehachse (42) drehbar ist,
wobei das Betätigungsrad (40) mit der Combiner-Halterung (16) wirkverbunden ist, sodass aufgrund der Drehbewegung des Betätigungsrads (40) die Combiner-Halterung (16) zumindest teilweise in Axialrichtung der Schwenkachse (18) gegen die Federkraft des ersten Federelements (26) bewegt wird, wodurch die Verbindung zwischen dem ersten Verriegelungselement (22) und dem zweiten Verriegelungselement (24) gelöst wird.

6. Combinerpositionierungseinheit nach Anspruch 5, **dadurch gekennzeichnet, dass** der Betätigungstaster (36) gegen eine Federkraft eines dritten Federelements (44) betätigt werden kann, das vorzugsweise zwischen dem Gehäuse (14) und einem Tasterkopf des Betätigungstasters (36) angeordnet ist.

7. Combinerpositionierungseinheit nach Anspruch 5 oder 6, **dadurch gekennzeichnet, dass** die Wirkverbindung zwischen dem Betätigungstaster (36) und dem Betätigungsrad (40) eine Zahnstruktur ist.

8. Combinerpositionierungseinheit nach Anspruch 7, **dadurch gekennzeichnet, dass** die Zahnstruktur des Betätigungsrads (40) auf einem Außenumfang eines ersten Vorsprungs (46) des Betätigungsrads (40), der sich in Radialrichtung erstreckt, angeordnet ist.

9. Combinerpositionierungseinheit nach einem der Ansprüche 5 bis 8, **dadurch gekennzeichnet, dass** das Betätigungsrad (40) einen zweiten Vorsprung (48) umfasst, der sich in Radialrichtung erstreckt und eine Betätigungsnocke (50) umfasst, um mit der Combiner-Halterung (16) zusammenzuwirken, wobei sich die Betätigungsnocke (50) in Axialrichtung des Betätigungsrads (40) erstreckt.

10. Combinerpositionierungseinheit nach einem der Ansprüche 5 bis 9, **dadurch gekennzeichnet, dass** das Betätigungsrad (40) mit dem Gehäuse (14) wirkverbunden ist, sodass aufgrund einer Drehbewegung des Betätigungsrads (40), das Betätigungsrad (40) zumindest teilweise in Axialrichtung der Drehachse (42) bewegt wird, wobei aufgrund der Axialbewegung des Betätigungsrads (40) die Combiner-Halterung (16) zumindest teilweise in Axialrichtung der Schwenkachse (18) gegen die Federkraft des ersten Federelements (26) bewegt wird, wodurch die Verbindung zwischen dem ersten Verriegelungselement (22) und dem zweiten Verriegelungselement (24) gelöst wird.

11. Combinerpositionierungseinheit nach einem der Ansprüche 5 bis 10, **dadurch gekennzeichnet, dass** das Betätigungsrad (40) eine Vorderseite (52) umfasst, die in Richtung der Drehachse (42) des Betätigungsrads (40), dem Gehäuse (14) zugewandt, angeordnet ist, wobei mindestens ein erstes Rampenelement (54), das eine geneigte erste Gleitfläche (56) in Bezug zur Vorderseite (52) des Betätigungsrads (40) umfasst, auf der Vorderseite (52) angeordnet ist und das Gehäuse (14) auf seiner dem Betätigungsrad (40) zugewandten Fläche (58) mindestens ein zugehöriges zweites Rampenelement (60) umfasst, das eine geneigte zweite Gleitfläche (62) umfasst, wobei in einer Drehbewegung des Betätigungsrads (40) in Bezug zum Gehäuse (14) die geneigte erste Gleitfläche (56) zumindest teilweise entlang der geneigten zweiten Gleitfläche (62) gleitet, wodurch das Betätigungsrad (40) in Axialrichtung der Drehachse (42) bewegt wird.

12. Combinerpositionierungseinheit nach einem der Ansprüche 10 oder 11, wobei das Betätigungsrad (40) zumindest teilweise in Axialrichtung der Drehachse (42) gegen eine Federkraft eines vierten Federelements (64) beweglich ist, wobei das vierte Federelement (64) vorzugsweise in Längsrichtung der Drehachse (42) des Betätigungsrads (40) angeordnet ist.

13. Combinerpositionierungseinheit nach einem der vorstehenden Ansprüche, **dadurch gekennzeichnet, dass** das erste Verriegelungselement (22) ein Verriegelungsstift ist und das zweite Verriegelungselement (24) eine Eingriffsbohrung im Gehäuse (14) ist.

14. Combinerpositionierungseinheit nach Anspruch 13, **dadurch gekennzeichnet, dass** der Verriegelungsstift und/oder das die Eingriffsbohrung umgebende Gehäuse (14) eine geneigte Struktur umfasst, die derart ausgebildet und angeordnet ist, dass, wenn der Combiner (12) manuell aus der Betriebsposition in die Lagerposition verschwenkt wird, der Verriegelungsstift entlang der geneigten Struktur gleitet und die Combiner-Halterung (16) in Axialrichtung gegen die Federkraft des ersten Federelements (26) verschiebt, und wenn der Verriegelungsstift mit der Eingriffsbohrung ausgerichtet ist, die Federkraft des ersten Federelements (26) die Combiner-Halterung (16) in Axialrichtung verschiebt, um mit dem Verriegelungsstift in die Eingriffsbohrung einzugreifen.

## Revendications

1. Unité de positionnement (10) de combineur pour un système d'affichage tête haute destiné à être utilisé dans des véhicules, comprenant
un boîtier (14),
un combineur (12) pourvu d'un support (16) de combineur, le support (16) de combineur étant agencé pivotant autour d'un axe de pivotement (18) entre une position de rangement repliée et une position fonctionnelle dépliée dans le boîtier (14), et
un élément d'actionnement (20) destiné à libérer le support (16) de combineur de la position de rangement, moyennant quoi
le support (16) de combineur comprend un premier élément de verrouillage (22) destiné à s'engager avec un deuxième élément de verrouillage correspondant (24) du boîtier (14) et, dans la position de rangement, le premier élément de verrouillage (22) est engagé avec le deuxième élément de verrouillage (24), **caractérisée en ce que**
le support (16) de combineur est au moins partiellement mobile dans la direction axiale de l'axe de pivotement (18) à l'encontre d'une force de ressort d'un premier élément ressort (26) par manœuvre de l'élément d'actionnement (20), de sorte que la liaison du premier élément de verrouillage (22) et du deuxième élément de verrouillage (24) soit débrayable, et moyennant quoi le combineur (12) est susceptible de pivoter autour de l'axe de pivotement (18) pour adopter la position fonctionnelle sous l'effet d'une force de ressort d'un deuxième élément ressort (32) relié au support (16) de combineur.

2. Unité de positionnement de combineur selon la revendication 1, **caractérisée en ce que** le premier élément ressort (26) est agencé sur l'axe de pivotement (18) entre le support (16) de combineur et le boîtier (14) .

3. Unité de positionnement de combineur selon la revendication 1 ou 2, **caractérisée en ce que** le deuxième élément ressort (32) est relié au support (16) de combineur dans une direction perpendiculaire à l'axe de pivotement (18) du support (16) de combineur.

4. Unité de positionnement de combineur selon l'une des revendications 1 à 3, **caractérisée en ce que** le deuxième élément ressort (32) est précontraint lorsque le combineur (12) occupe la position de rangement.

5. Unité de positionnement de combineur selon l'une des revendications 1 à 4, **caractérisée en ce que** l'élément d'actionnement (20) comprend
un bouton d'actionnement (36) guidé dans un trou de guidage (38) du boîtier (14) et
une roue d'actionnement (40) agencée rotative dans le boîtier (14) et en liaison fonctionnelle avec le bouton d'actionnement (36), de sorte que
la roue d'actionnement (40) soit au moins partiellement rotative sur son axe de rotation (42) suite à un mouvement de translation du bouton d'actionnement (36), la roue d'actionnement (40) étant en liaison fonctionnelle avec le support (16) de combineur de sorte que, suite au mouvement de rotation de la roue d'actionnement (40), le support (16) de combineur effectue un mouvement au moins partiel dans la direction axiale de l'axe de pivotement (18) à l'encontre de la force de ressort du premier élément ressort (26) en débrayant la liaison du premier élément de verrouillage (22) et du deuxième élément de verrouillage (24).

6. Unité de positionnement de combineur selon la revendication 5, **caractérisée en ce que** le bouton d'actionnement (36) est manœuvrable à l'encontre d'une force de ressort d'un troisième élément ressort (44), de préférence agencé entre le boîtier (14) et une tête de bouton du bouton d'actionnement (36).

7. Unité de positionnement de combineur selon la revendication 5 ou 6, **caractérisée en ce que** la liaison fonctionnelle entre le bouton d'actionnement (36) et la roue d'actionnement (40) est une structure dentée.

8. Unité de positionnement de combineur selon la revendication 7, **caractérisée en ce que** la structure dentée de la roue d'actionnement (40) est agencée sur une périphérie extérieure d'une première protubérance (46) de la roue d'actionnement (40) s'étendant dans la direction radiale.

9. Unité de positionnement de combineur selon l'une des revendications 5 à 8, **caractérisée en ce que** la roue d'actionnement (40) comprend une deuxième protubérance (48) s'étendant dans la direction radiale, comprenant une came d'actionnement (50) destinée à fonctionner avec le support (16) de combineur, la came d'actionnement (50) s'étendant dans la direction axiale de la roue d'actionnement (40) .

10. Unité de positionnement de combineur selon l'une des revendications 5 à 9, **caractérisée en ce que** la roue d'actionnement (40) est en liaison fonctionnelle avec le boîtier (14) de sorte que, suite à un mouvement de rotation de la roue d'actionnement (40), la roue d'actionnement (40) effectue un mouvement au moins partiel dans la direction axiale de l'axe de rotation (42), suite au mouvement axial de la roue d'actionnement (40), le support (16) de combineur effectuant un mouvement au moins partiel dans la direction axiale de l'axe de pivotement (18) à l'encontre de la force de ressort du premier élément ressort (26) en débrayant la liaison du premier élément de verrouillage (22) et du deuxième élément de verrouillage (24).

11. Unité de positionnement de combineur selon l'une des revendications 5 à 10, **caractérisée en ce que** la roue d'actionnement (40) comprend une face avant (52) agencée en direction de l'axe de rotation (42) de la roue d'actionnement (40) en regard du boîtier (14), au moins un premier élément rampe (54) comprenant une première surface de glissement inclinée (56) par rapport à la face avant (52) de la roue d'actionnement (40) étant agencé sur la face avant (52), et le boîtier (14) comprenant sur sa surface (58) en regard de la roue d'actionnement (40) au moins un deuxième élément rampe correspondant (60) comprenant une deuxième surface de glissement inclinée (62), dans un mouvement de rotation de la roue d'actionnement (40) par rapport au boîtier (14), la première surface de glissement inclinée (56) glissant au moins partiellement le long de la deuxième surface de glissement inclinée (62) en mettant en mouvement la roue d'actionnement (40) dans la direction axiale de l'axe de rotation (42).

12. Unité de positionnement de combineur selon les revendications 10 ou 11, dans laquelle la roue d'actionnement (40) est au moins partiellement mobile dans la direction axiale de l'axe de rotation (42) à l'encontre d'une force de ressort d'un quatrième élément ressort (64), le quatrième élément ressort (64) étant de préférence agencé dans la direction longitudinale de l'axe de rotation (42) de la roue d'actionnement (40).

13. Unité de positionnement de combineur selon l'une des revendications précédentes, **caractérisée en ce que** le premier élément de verrouillage (22) est une goupille de verrouillage et le deuxième élément de verrouillage (24) est un trou d'engagement dans le boîtier (14).

14. Unité de positionnement de combineur selon la revendication 13, **caractérisée en ce que** la goupille de verrouillage et/ou le boîtier (14) entourant le trou d'engagement comprennent/comprend une structure inclinée formée et agencée de telle manière que, lors d'un pivotement manuel du combineur (12) de la position fonctionnelle à la position de rangement, la goupille de verrouillage glisse le long de la structure inclinée en déplaçant le support (16) de combineur dans la direction axiale à l'encontre de la force de ressort du premier élément ressort (26), et, lorsque la goupille de verrouillage est alignée avec le trou d'engagement, la force de ressort du premier élément ressort (26) déplace le support (16) de combineur dans la direction axiale pour engager la goupille de verrouillage dans le trou d'engagement.
